# EUROPEAN PATENT APPLICATION

(11) **EP 2 434 336 A1**
(43) Date of publication of application: **28.03.2012**
(21) Application number: 10777597.5
(22) Date of filing: 26.01.2010
(51) Int. Cl.: G02F 1/1337, G01N 21/35

(54) **LIQUID CRYSTAL PANEL AND METHOD FOR INSPECTING LIQUID CRYSTAL PANEL**

(30) Priority: 18.05.2009 JP 2009119567
(71) Applicant: Sharp Kabushiki Kaisha, Osaka-shi, Osaka 545-8522 (JP)
(72) Inventor: HAYAMA, Takafumi, Osaka-shi Osaka 545-8522 (JP)
(74) Representative: Houle, Timothy James
(86) International application number: PCT/JP2010/050939
(87) International publication number: WO 2010/134361

(57) **Abstract**

Provided is a liquid crystal panel (1) wherein liquid crystal alignment films (18, 24) composed of polyimide are formed on the facing surface of a TFT substrate (10) and a CF substrate (20), and a liquid crystal is sealed between the TFT substrate (10) and the CF substrate (20). On the TFT substrate (10) side, a metal film (40) which can be optically recognized through the CF substrate (20) side and operates as an infrared light reflected plate at the time of measuring the imidization of the liquid crystal alignment film (18) which covers the TFT substrate is formed.

## Description

### Technical Field

The present invention relates to a liquid crystal panel and a method for inspecting a liquid crystal panel.

### Background Art

A liquid crystal panel that incorporates a thin film transistor (sometimes referred to as "TFT" in the present specification), especially, an active matrix type of liquid crystal panel has excellent performance in image quality, view angle, response speed and the like, so that it is widely used for motion picture display.

The liquid crystal panel is composed by disposing two electrode substrates each having an alignment layer with the alignment layer opposite to each other; and sealing liquid crystal between these electrode substrates. The two electrode substrates are a TFT substrate and a color filter (sometimes referred to as "CF" in the present specification) substrate in a TFT liquid crystal panel.

The alignment layer is generally composed of polyimide (sometimes referred to as "PI" in the present invention). Examples of the liquid crystal panel that uses PI alignment layer are shown in patent documents 1 to 3.

PI alignment layer can be obtained, for example, through the following process: first, a solution of a polyamic acid, a material for alignment layer, is applied on a substrate, then the applied polyamic acid is baked for drying and imidization.

During the alignment layer forming process, if the imidization of the polyamic acid becomes insufficient because of, for example, a low baking temperature of the applied polyamic acid, defective alignment of the liquid crystal might occur. Because of this, during the production process of the liquid crystal panel, it is important to monitor an imidization rate of the alignment layer.

A defect in the PI alignment layer becomes apparent from appearance of defective display such as stain, unevenness and the like when the liquid crystal panel is completed by sealing the liquid crystal between the electrode substrates, and a voltage is applied to the liquid crystal panel. However, it is desirable to find such a defect in an as early stage as possible and take appropriate measures.

A conventional method for measuring imidization rate of the PI alignment layer shown in Fig. 7 to Fig. 9. Fig. 7 shows a TFT liquid crystal panel 100. The TFT liquid crystal panel 100 is, as shown in Fig. 8, separated into a TFT substrate 101 and a CF substrate 102. And, a stylus 103 is operated by a not-shown manipulator to rake up PI specimens 104 from, for example, a surface of the TFT substrate 101. The raked-up PI specimens 104 are placed on a measurement stage 105 as shown in Fig. 9. The PI specimens 104 are gathered in a small area, for example, a 50 µm square. Then, a spectrum of the PI specimens 104 is analyzed by a Fourier transform infrared spectrometer (sometimes referred to as "TF-IR" in the present specification) and the imidization rate is measured.

### Citation List

### Patent Literature

PLT1: JP-A-2001-5001
PLT2: JP-A-2002-40438
PLT3: JP-A-2002-69447

### Summary of Invention

### Technical Problem

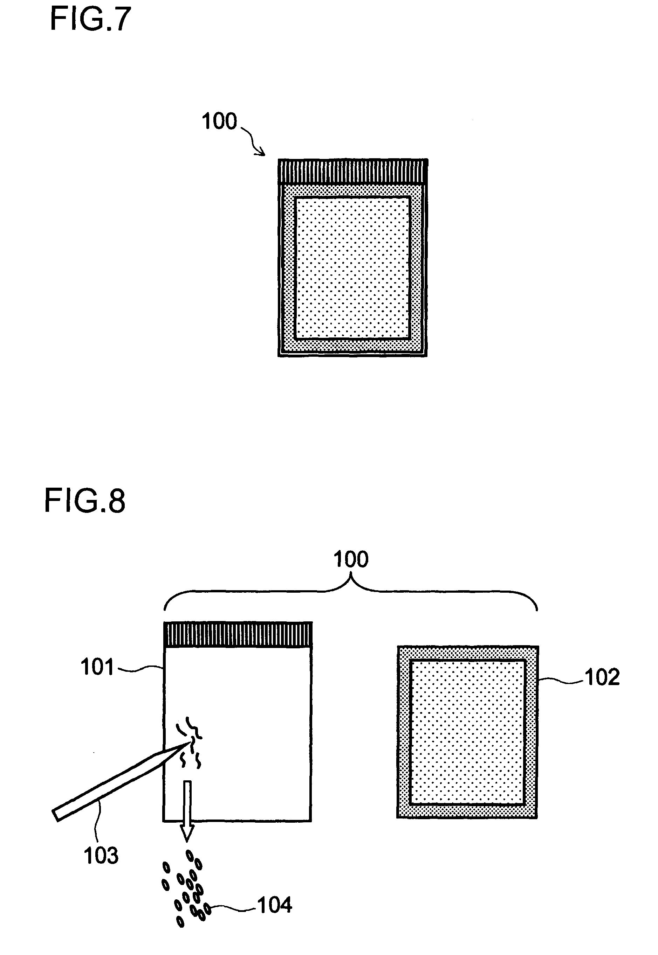

The method for measuring PI imidizaion rate as shown in Fig. 7 to Fig. 9 requires separation of the TFT liquid crystal panel 100, which has been finished or nearly finished, into the TFT substrate 101 and the CF substrate 102; besides, special apparatuses such as the manipulator and the like are needed. Such requirements end up longer time to obtain the measurement result. Above-mentioned time-consuming process results in delayed feedback to the production line when problems are found.

The present invention has been made in light of the above points, and it is an object of the present invention to provide a liquid crystal panel that can be measured an imidization rate of its polyamide alignment layer without rupturing the liquid crystal panel itself. Besides, it is another object of the present invention to provide a method for inspecting liquid crystal panel that efficiently measures an imidization rate of a polyimide alignment layer of a liquid crystal panel.

### Solution to Problem

To achieve the above objects, according to the present invention, a liquid crystal panel comprises: a TFT substrate and a CF substrate, alignment layers on opposing sides of the TFT substrate and the CF substrate, the alignment layers being composed of polyamide, liquid crystal sealed between the TFT substrate and the CF substrate, a metal film on the TFT substrate, the metal film being optically recognizable through the CF substrate, and the metal film serves as an infrared light reflector when an imidization rate of the alignment layer that cover the metal film is measured.

The liquid crystal panel having the above structure is able to be measured the imidization rate of the alignment layer that covers the metal film by using the metal film, which is optically recognizable through the CF substrate, as the infrared light reflector. Thus, even if the manufacturing process of the liquid crystal panel advances or nears to the final stage, it is possible to measure the imidization rate of the polyimide alignment layer without rupturing the liquid crystal panel itself. The measurement does not require rupture of the liquid crystal panel, so that can be done rapidly, and also it can be done relatively easily because it requires only an optical apparatus for the measurement.

In the liquid crystal panel having the above structure, it is desirable that the metal film is formed as part of a gate wiring or a source wiring of the TFT substrate.

According to this structure, it is possible to form the metal film by using a usual process for liquid crystal panel production as it is. Besides, to make the metal film optically recognizable through the CF substrate, if a hole is formed through a laminated layer formed on the metal film by patterning and etching by means of a mask, polyimide collects in the hole, so that in a case where, for example, infrared light is emitted from an FT-IR and reflected by the metal film, an infrared light travel distance becomes long and a spectrum S/N ratio increases.

In the liquid crystal panel having the above structure, it is desirable that the metal film is disposed in a black matrix region surrounding a display area of the liquid crystal panel; ; and a black matrix of the CF substrate is provided with a see-through portion that allows optical recognition of the metal film.

According to this structure, the metal film is situated outside the display area, thereby it has no influence on the liquid crystal display. Besides, the see-through portion formed through the black matrix is also outside the display area, so that it is easy to make the see-through portion invisible by employing a structure in which the see-through portion is covered by a housing of an apparatus which incorporates the liquid crystal panel.

In the liquid crystal panel having the above structure, it is desirable that the metal film is formed as part of a compensation capacity wiring of the TFT substrate.

According to this structure, it is possible to form the metal film by using the usual process for the liquid crystal panel production. Besides, the compensation capacity portion is not covered by the black matrix, so that it is not necessary to add the trouble of forming the see-through portion through the black matrix.

According to the present invention, a method for inspecting a liquid crystal panel takes micro-reflection measurement by a Fourier transform infrared spectrometer to an alignment layer covering the above-described metal film of the liquid crystal panel, the Fourier transform infrared spectrometer measures an imidization state of the alignment layer by the infrared absorption spectrum of the alignment layer.

According to this method, since the imidization rate of the polyimide alignment layer is measured with a Fourier transform infrared spectrometer, a kind of generally-used equipment for analysis, without rupturing the liquid crystal panel containing the polyamide alignment layer, the measurement is done easily and rapidly.

### Advantageous Effects of Invention

According to the present invention, even if the manufacturing process of a liquid crystal panel advances or nears to the final stage, it is possible to measure the imidization rate of the polyimide alignment layer without rupturing the liquid crystal panel itself. Because of this, it is possible to easily check the quality of the liquid crystal alignment layer, and when any problem occurs, it can be fed back to the production line rapidly.

### Brief Description of Drawings

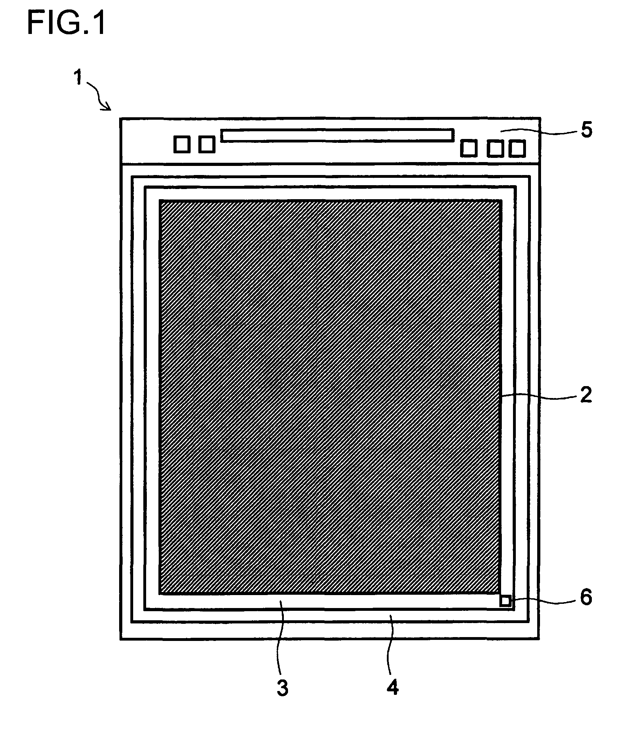

[Fig. 1] is a schematic plan view of a liquid crystal panel according to an embodiment of the present invention.

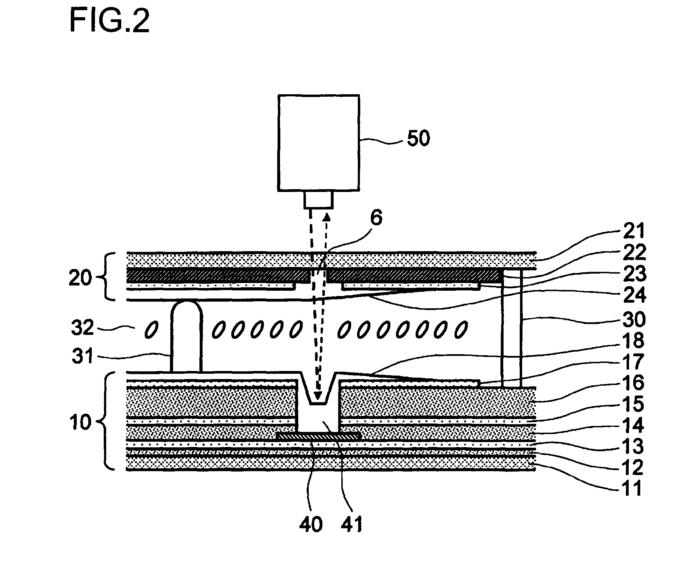

[Fig. 2] is a schematic vertical sectional view of the liquid crystal panel in Fig. 1.

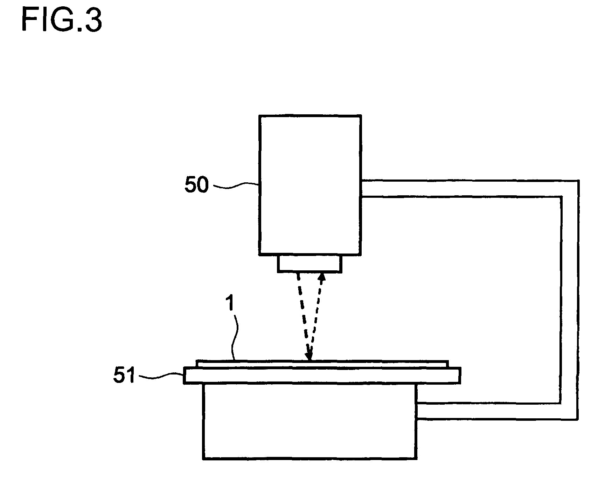

[Fig. 3] is a schematic view describing an imidization rate measurement of an alignment layer of the liquid crystal panel in Fig. 1.

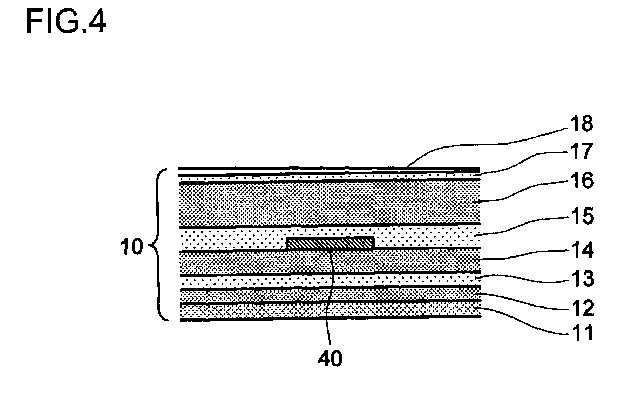

[Fig. 4] is a schematic vertical sectional view showing another embodiment of a TFT substrate.

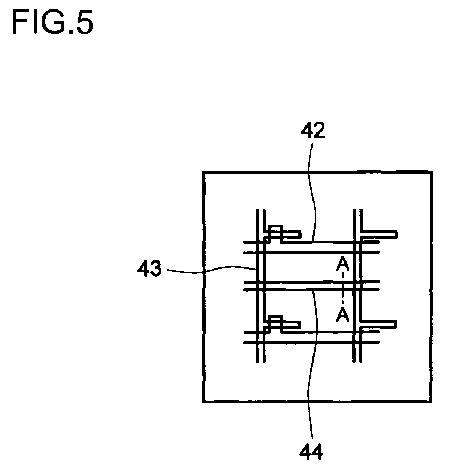

[Fig. 5] is a schematic plan view of a compensation capacity portion in a liquid crystal panel.

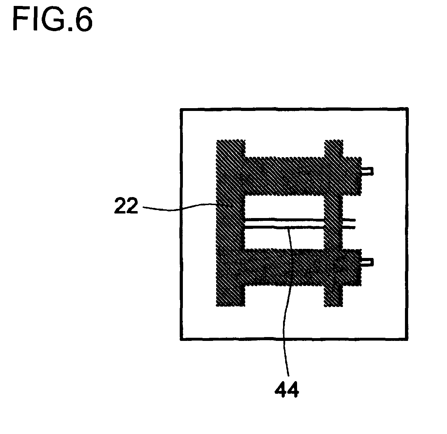

[Fig. 6] is a schematic plan view showing a situation where a black matrix overlaps with the portion of Fig. 5.
[Fig. 7] is a schematic plan view showing a structure of a conventional liquid crystal panel.
[Fig. 8] is a schematic view describing a situation where specimens of an alignment layer are taken from the liquid crystal panel in Fig. 7.

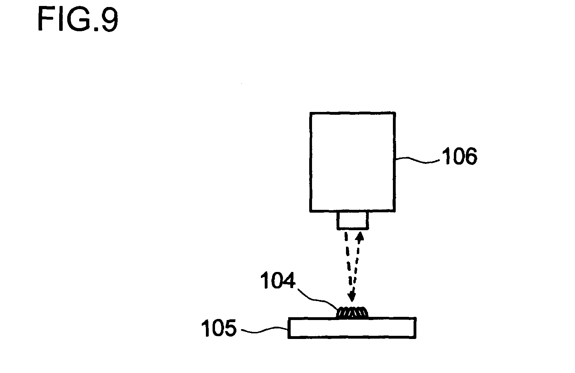

[Fig. 9] is a schematic view describing measurement of imidization rate of alignment layer specimens from the liquid crystal panel in Fig. 7.

### Description of Embodiment

Hereinafter, an embodiment of the present invention is described with reference to the drawings. In the present specification, the description is performed on assumption that whether the liquid crystal panel is in process or a finished one, the liquid crystal panel is placed on a horizontal placement surface with a display surface side facing upward.

In a liquid crystal panel 1 shown in Fig. 1, a black matrix (sometimes referred to as "BM" in the present specification) region 3 encloses an outside of a central display area 2 (a region to which hatching is applied) like a frame. A seal region 4 encloses a further outside of the BM region 3. An upper portion of the liquid crystal panel 1 in Fig. 1 is formed into a terminal portion 5. A see-through portion 6 is formed in the BM region 3.

Fig. 2 shows a structure of a portion near the see-through portion 6. A TFT substrate 10 has a structure in which the following components are laminated successively on an upper surface of a glass substrate 11. Specifically, the components are: a base insulation film (base court) 12; a gate insulation film (sometimes referred to as "GI" in the present specification) 13; a between-layers insulation film 14; a passivation film (sometimes referred to as "Pas film" in the present specification) 15 that is a protection film; an organic insulation film 16; a transparent electrode film (sometimes referred to as "ITO" in the present specification) 17; and an alignment layer 18 composed of PI.

A CF substrate 20 has a structure in which the following components are laminated successively on a lower surface of a glass substrate 21. Specifically, the components are: a BM 22; an ITO 23; and an alignment layer 24 composed of PI.

A seal 30 for forming a liquid crystal sealing portion and a photospacer 31 for forming a predetermined gap between the TFT substrate 10 and the CF substrate 20 are disposed between the TFT substrate 10 and the CF substrate 20. If the height of the photospacer 31 is about 4 µm, for example, the thickness of a liquid crystal layer 32 is about 4 µm.

Attachment of the TFT substrate 10 and the CF substrate 20 is performed as follows. The CF substrate 20 produced in a CF substrate production process is disposed with the alignment layer 24 facing upward; on an outside of the layer such as the BM 22 or others, a sealant composed of an ultraviolet and heat curing resin is applied to form a frame by means of a not-shown dispenser. And, a liquid crystal material is poured in the frame of the sealant. Then, the TFT substrate 10 produced in a TFT substrate production process is disposed on the CF substrate 20 with the alignment layer 18 facing downward. The CF substrate 20 and the TFT substrate 10 are attached to each other under a sub-atmospheric pressure; thereafter, the environment surrounding the attached substrates is returned to the atmospheric pressure. The CF substrate 20 and the TFT substrate 10 facing each other with the sealant and the photospacer 31 interposed therebetween are pressed toward each other by the atmospheric pressure. Then, ultraviolet rays are directed to the sealant, and the attached substrates are heated, whereby the sealant is cured and the seal 30 is formed. In this way, the attachment of the TFT substrate 10 and the CF substrate 20 is completed.

The above structure of the liquid crystal panel 1 is merely an example, and does not limit the present invention. Film structures of the TFT substrate 10 and the CF substrate 20 described hereinafter are also mere examples.

A material of the base insulation film 12 is SiO₂/SiON and so formed as to have a film thickness of 100 nm by chemical vapor deposition (hereinafter referred to as "CVD"). A material of the GI 13 is SiO₂ and so formed as to have a film thickness of 75 nm by CVD. Materials of the between-layers insulation film 14 are SiO₂/SiN/SiO₂ and so formed as to have film thicknesses of 600 nm/250 nm/50 nm by CVD. A material of the Pas film 15 is SiN and so formed as to have a film thickness of 500 nm by CVD. A material of the organic insulation film 16 is Jas, an acrylic resin, and so formed as to have a film thickness of 2400 nm by coating. A material of the ITO 17 is tin-doped indium oxide and so formed as to have a film thickness of 100 nm by sputtering. A material of the alignment layer 18 is polyimide and so formed as to have a film thickness of 100 to 200 nm by coating.

Materials of a gate wiring and a compensation capacity wiring, which are formed on the TFT substrate 10, are W/TaN and so formed as to have film thicknesses of 370 nm/30 nm by sputtering. Materials of a source wiring, which is likewise formed on the TFT substrate 10, are Ti/Al/Ti/ and so formed as to have film thicknesses of 100 nm/350 nm/100 nm by sputtering.

A material of the BM 22 is a positive photosensitive resin, in which a black pigment including carbon particles is dispersed, and so formed as to have a film thickness of 2.0 µm by coating. A coloring material (R, G, B) of a color filter is a colored acrylic photosensitive resin, and so formed as to have a film thickness of 2.0 µm by coating. A material of the ITO 23 is a tin-doped indium oxide, and so formed as to have a film thickness of 100 nm by sputtering. A material of the alignment layer 24 is polyimide, and so formed as to have a film thickness of 100 to 200 nm by coating.

In the present invention, a metal film 40, which is recognizable through the CF substrate 20, is formed on the TFT substrate 10. The metal film 40 serves as an infrared light reflector when the imidization rate of the alignment layer 18 that covers the metal film is measured. The metal film 40 is formed as part of the gate wiring, the source wiring, the compensation capacity wiring and the like or formed as another metal film that is independent of them.

In the structure shown in Fig. 2, it is assumed that part of the gate wiring or of the source wiring is the metal film 40. The metal film 40 is formed on the GI 13. The between-layers insulation film 14, the Pas film 15, the organic insulation film 16 and the ITO 17, which are laminated on the metal film 40, are provided with a hole 41 that penetrates the films to reach the metal film 40. The hole 41 is formed by a usual method in which a mask having a hole pattern is overlapped and etching is performed. When the alignment layer 18 is printed after the hole 41 is formed, PI enters the hole 41 and a PI layer thicker than the other portions is formed.

The CF substrate 20 is provided with the see-through portion 6 at a position above the hole 41. A hole penetrating the BM 22 and the ITO 23 serves as the see-through portion 6. The see-through portion 6 is also formed by the usual method in which a mask having a hole pattern is overlapped and etching is performed. When the alignment layer 24 is printed after the see-through portion 6 is formed, PI collects in the see-through portion 6 and a PI layer thicker than the other portions is formed. The thick PI layer brings effects that when a spectrum analysis is performed by an FT-IR, an infrared light travel distance becomes long and a spectrum S/N ratio rises.

The sizes of the hole 41 and the see-through portion 6 are 50 µm square or larger, respectively. The 50 µm square is an area in which a spectrum having a good S/N ratio is obtained when the spectrum analysis is performed by micro-reflection method using an FT-IR. Accordingly, it is sufficient if only the hole 41 and the see-through portion 6 are larger than 50 µm square, regardless of accuracy. The figures of the hole 41 and the see-through portion 6 are not limited to a square. They may be positioned anywhere in the BM region 3.

If there is a worry over a light leak from the see-through portion 6, a black paint may be applied, or a light blockage seal may be attached, to the surface of the glass substrate 21. Such measures are not necessary if a housing of an apparatus incorporating the liquid crystal panel 1 covers the BM.

When measuring the imidization rates of the alignment layer 18 and alignment layer 24 of the liquid crystal panel 1 that has the above structure, as shown in Fig. 3, the liquid crystal panel is placed on a measurement stage 51 that is placed under an FT-IR 50. The FT-IR 50 and the measurement stage 51 constitute an FT-IR microscope. The size of the measurement stage 51 is about 130 mm × 200 mm. And, a position of the measurement stage 51 is adjusted and a surface of the metal film 40 is positioned at a focal position of the FT-IR 50. Then, the imidization rate is measured by the micro-reflection method.

Infrared light is directed from the FT-IR 50 to the metal film 40. As an infrared light source, for example, an SiC infrared light source or a ceramic light source may be used. As for the wavelength, a wavelength of 2.5 µm to 25 µm, which is an intermediate infrared wavelength region, is used. Transcribed wavelengths are 4000 cm⁻¹ to 400 cm⁻¹. As for the detector, a mercury-cadmium-tellurium (MCT) detector is used.

A masking size is adjusted looking at a visible image in a microscope view field of the FT-IR 50 and a measurement area is decided. A dual masking method is used.

A beam diameter at an emission opening of an infrared light source is about 7 to 8 mm. The beam is focused by the masking method and directed to the see-through portion 6. The distance from the FT-IR 50 to the liquid crystal panel 1 is 10 to 20 mm. The measurement stage 51 is large and a clearance to the FT-IR 50 is relatively large, so that it is possible to easily set the liquid crystal panel 1.

A Cassegrain having a magnification of 32 is used. In a case where the Cassegrain having this magnification, a masking size (focusing area of the infrared light) of 46 µm × 46 µm satisfies an element size of 250 µm × 250 µm of the MCT detector. This is a reason that the standard of the size of the see-through portion 6 is the square having a 50 µm edge.

The infrared light is reflected by the metal film 40 and detected by the MCT detector. The spectrum analysis of the received infrared light is performed, whereby it is possible to measure the imidization rate of the polyimide.

As shown in Fig. 4, it is also possible to employ a structure in which the Pas film 15, the organic insulation film 16 and the ITO 17 remain on the metal film 40. The infrared light passes through these films and reflects off the metal film 40, so that the imidization rate measurement of the alignment layer 18 and alignment layer 24 by the FT-IR 50 is possible. In the spectrum analysis, the peak values of the materials of the Pas film 15, the organic insulation film 16, the ITO 17 and of the liquid crystal material of the liquid crystal layer 32 are subtracted. Besides, to increase the spectrum S/N ratio, the number of integrations during the analysis period may be doubled. For example, 128 times is increased to 256 times.

It is also possible to form the metal film 40 as part of the compensation capacity wiring. In Fig. 5, 42 indicates the gate wiring; 43 indicates the source wiring; and 44 indicates the compensation capacity wiring (hereinafter referred to as "Cs wiring"). As shown in Fig. 6, the Cs wiring 44 is not covered by the BM 22, so that the trouble of forming the see-through portion on the BM 22 is unnecessary.

A sectional view cut along an A-A line in Fig. 5 is as shown in Fig. 4. However, the width of the metal film 40 is about 20 µm. When the infrared light reflection area is that small, the S/N ratio may be deteriorated; however, by increasing the number of integrations during the analysis period (e.g., 128 times is increased to be fourfold, that is, 512 times), the compensation is possible.

Hereinbefore, the embodiment of the present invention is described; however, the scope of the present invention is not limited to this, and it is possible to add various modifications and put them into practical applications without departing from the spirit of the present invention.

### Industrial Applicability

The present invention is widely applicable to TFT liquid crystal panels.

### Reference Signs List

- 1: liquid crystal panel
- 2: display area
- 3: black matrix region
- 6: see-through portion
- 10: TFT substrate
- 11: glass substrate
- 12: base insulation film
- 13: gate insulation film
- 14: between-layers insulation film
- 15: protection film
- 16: organic insulation film
- 17: transparent electrode film
- 18: alignment layer
- 20: CF substrate
- 21: glass substrate
- 22: black matrix
- 23: transparent electrode film
- 24: alignment layer
- 30: seal
- 31: photospacer
- 32: liquid crystal layer
- 40: metal film
- 50: Fourier transform infrared spectrometer
- 51: measurement stage

## Claims

1. A liquid crystal panel comprising:
a TFT substrate and a CF substrate,
alignment layers on opposing sides of the TFT substrate and the CF substrate,
the alignment layers being composed of polyimide,
liquid crystal sealed between the TFT substrate and the CF substrate,
a metal film on the TFT substrate, the metal film being optically recognizable through the CF substrate,
wherein the metal film serves as an infrared light reflector when an imidization rate of the alignment layer that cover the metal film is measured.

2. The liquid crystal panel according to claim 1, wherein
the metal film is formed as part of a gate wiring or a source wiring of the TFT substrate.

3. The liquid crystal panel according to claim 1, wherein
the metal film is disposed in a black matrix region outside a display area; and
a black matrix of the CF substrate is provided with a see-through portion that allows optical recognition of the metal film.

4. The liquid crystal panel according to claim 2, wherein
the metal film is disposed in a black matrix region outside a display area; and
a black matrix of the CF substrate is provided with a see-through portion that allows optical recognition of the metal film.

5. The liquid crystal panel according to claim 1, wherein
the metal film is formed as part of a compensation capacity wiring of the TFT substrate.

6. A method for inspecting a liquid crystal panel according to any one of claims 1 to 5, comprising the steps of:
applying micro-reflection measurement by a Fourier transform infrared spectrometer to the alignment layer covering the metal film;
measuring imidization rate of the alignment layer by an infrared light absorption spectrum of the alignment layer.
